# EUROPEAN PATENT SPECIFICATION

(11) **EP 1 355 536 B1**
(45) Date of publication and mention of the grant of the patent: **11.01.2012**
(21) Application number: 01997224.9
(22) Date of filing: 20.11.2001
(51) Int. Cl.: A23F 5/14, A23F 5/04, A23F 5/00

(54) **A METHOD FOR ENHANCING POST-PROCESSING CONTENT OF BENEFICIAL COMPOUNDS IN BEVERAGES NATURALLY CONTAINING SAME**
VERFAHREN ZUR ERHÖHUNG DES GEHALTS AN ZUTRÄGLICHEN VERBINDUNGEN NACH DER VERARBEITUNG IN GETRÄNKEN, IN DENEN DIESE VERBINDUNGEN NATÜRLICH VORKOMMEN
PROCEDE D'AUGMENTATION, APRES TRAITEMENT, DE LA QUANTITE DE COMPOSES BENEFIQUES CONTENUS DANS DES BOISSONS RENFERMANT NATURELLEMENT CES COMPOSES

(30) Priority: 20.11.2000 US 717890
(43) Date of publication of application: 29.10.2003
(73) Proprietor: Applied Food Sciences, Inc., Austin, TX 78704 (US)
(72) Inventor: SLAGA, Tom, Lakewood, CO 80214 (US); ZHAO, Jifu, Lakewood, CO 80214 (US); ZAPP, Lorreta, Austin, TX 78716 (US); LANG, Mark, Austin, TX 78716 (US)
(74) Representative: Loven, Keith James
(86) International application number: PCT/US2001/044766
(87) International publication number: WO 2002/041700

(56) References cited:
- EP-A- 0 299 106
- WO-A-01/67880
- WO-A-98/09533
- US-A- 312 516
- US-A- 2 198 207
- US-A- 4 053 652
- US-A- 4 255 461
- US-A- 4 798 732

## Description

### BACKGROUND OF THE INVENTION

### 1. Field of The Invention

The present invention relates to beverage substrate processing, pertaining most closely to coffee bean processing for use as coffee beverage substrate.

### 2. Background Information

This invention relates to new coffee beans with an increased phenolic acid and aroma contents, as well as to produce powder-form and instant coffee using the new beans.

Phenolic acids in coffee are mainly esters of quinic acid with different amount of caffeyl groups attached to its different positions. The phenolic acids present in coffee such as chlorogenic acid, caffeic acid, paracoumaric acid and eugenol have been shown to exert cancer preventive activities in animal models. Chlorogenic acid has also been found to inhibit methylazoxymethanol-induced large intestinal tumors in hamster.

Furthermore, it has now been found that coffee with a higher content of phenolic acids can be more easily digested. Chlorogenic acid, which is the main phenolic acid in coffee, is able to protect the gastric mucosa against irritations, and, therefore, improves the digestibility of foods, beverages and medicaments. The improved digestibility is expressed through a much reduced systemic acid secretion (such as causes heartburn, etc.) which has been found to be directly dependent on an increased level of chlorogenic acid content in roasted coffee.

It is clear, then, that a coffee processing methodology which yields an end product which is higher in phenolic acids (less is removed by the roasting process), but which lacks detrimental flavor alterations, would be a highly desirable contribution. Normally the natural chlorogenic acid content of coffee is reduced by approximately 40 to 80% during conventional roasting process. Analysis by the present inventor indicates that green coffee beans which initially contain 4% phenolic acids contain, respectively, 2% phenolic acids when light roasted, 1% when medium roasted, and less than 0.5% when dark roasted. This clearly represents a significant loss of beneficial compounds.

In addition to reducing beneficial chlorogenic acid constituent, conventional coffee roasting processes also produce a loss of overall weight (or the order of 12% to 17% of the initial raw coffee bean weight). The weight loss is due to the loss of residual moisture content still present in the raw coffee after drying, and through the loss by evaporation or chemical composition, of various constituents of the raw coffee, including the phenolic acids. Weight represents money to processed coffee vendors, so, in addition to inherently providing a more beneficial product which happens to be heavier because of a higher residual content of phenolic acids, producing a heavier processed coffee per unit green coffee bean input is simply an economic benefit to the vendor.

To continue the litany of problems with conventional coffee roasting processes: roasting also destroys natural aroma of green coffee beans, and generates bad compounds, such as 4-aminobiphenyl (ABP), 2-amino-1-methyl-6-phenyllimidazo[4,5-b]pyridine (PhIP) and glyoxal.

In view of the above, it is clear that it would be quite beneficial to humankind to provide some method, or combination of methods, which would elevate the postprocessing polyphenol content of coffee, without adversely affecting the taste of the beverage.

EP 0299106 A of Code Kaffee Handel, published 18 January 1989 describes roasted coffee having an increased total chlorogenic acid content, which is achieved either by adding mono- and dicaffeoylquinic acids or by extracting green coffee and adding the extract, which may be concentrated, to the roasted coffee.

US 2198207 of Sidney Musher, dated 23 April 1940 claims a method of stabilizing roasted coffee which comprises applying to the roasted coffee in defined conditions a small amount of green coffee bean flour in aqueous dispersion.

According to one aspect of the present invention there is provided a method for enhancing polyphenolic acid content in post-processing coffee beans comprising the steps of:
immersing a measure of raw green coffee beans in a pre-soak liquid containing water to extract polyphenolic acids into the pre-soak liquid; and treating roasted coffee beans with the pre-soak liquid;
characterised by: immersing raw green coffee beans in water at 75°C for three hours;
removing said coffee beans from said water and roasting said coffee beans; and quenching said coffee beans immediately after said roasting with a portion of said water from which the coffee beans have been removed, thereby enhancing the polyphenolic acid contant of said roasted coffee beans over the polyphenolic acid content in traditional roasted coffee beans.

It is also an object of the present invention provide an improved coffee processing method.

It is another object of the present invention to provide an improved coffee product.

It is another object of the present invention to provide an improved raw coffee processing method which yields a more healthful end product.

It is another object of the present invention to provide an improved raw coffee processing method which yields processed coffee beans or powdered coffee which is higher in weight per unit green bean input than product processed by conventional methods.

It is another object of the present invention to provide an improved raw coffee processing method which yields an end product which is higher in phenolic acid content per than coffee product which is processed by conventional methods.

It is another object of the present invention to provide an improved raw coffee processing method which yields a more easily digestible end product.

It is another object of the present invention to provide an improved raw coffee processing method which yields a more healthful end product, without any undesirable taste alterations.

The method involves, in the preferred mode, the remarkably simple process of soaking coffee beans in plain water prior to roasting, and, after roasting, "quenching" the beans with a portion of the pre-soak liquid (the solvent water, plus the polyphenols released into the water). This substantially enhances the post-roasting polyphenol content of roasted coffee beans.

### DETAILED DESCRIPTION OF THE PREFERRED EMBODIMENT

Additional research by the present inventors produced a finding that post-processing chlorogenic acid content in particular, and total polyphenol content in general, can be substantially enhanced for brewed coffee through an additional, remarkably simple process.

Both condensed tannin and polyphenolic acids in coffee beans have low water-solubility. According to experiments by the present inventors, under most circumstances, even hot water cannot significantly dissolve coffee polyphenols out of coffee. Something more than water at elevated temperatures applied at some random point in coffee beverage making is required to most significantly enhance the extraction of coffee polyphenols out of coffee beans and powder.

The present inventors have discovered that, if applied in the manner prescribed herein, the remarkably simple process of soaking coffee beans in plain water prior to roasting, and, almost immediately after roasting, "quenching" the beans with a portion of the pre-soak liquid (the solvent water, plus the polyphenols released into the water) will substantially enhance the post-roasting polyphenol content of coffee beans. This represents yet another significant leap forward in the present inventors' work in optimizing the post-processing polyphenol content of coffee as a means for delivering health-enhancing agents to consumers in a most non-intrusive and cost effective manner.

The process of the present invention, when compared with earlier, related processes developed by the present inventors, not only provides a substantial health benefits potential, but permits such benefits to be realized, and the product which carries the benefits to be distributed and sold, with no market or distribution related impediments or inconveniences. This is true, in part, because, unlike some of the referenced prior processes (the subject of first parent application relating to this continuation application) the process for spiking polyphenolics pursuant to the present invention, at least in the case of coffee, takes place at the commercial, roasting stage, rather than at the retail sales level and is, therefore, completely transparent to the end consumer.

Illustrative examples of this process of the present invention follow. It should be understood, of course, that commercial processing according to the present invention will take place on much larger scales than the illustrative examples provided, with proportional increases in the respective constituents (coffee beans, water, pre-soak liquid used for quenching, etc) for larger batches. The first described example is presently believed to be the optimal mode for this process.

According to the most economical version of the instant process, raw, green coffee beans are "pre-soaked" in water as described in more detail hereafter, and a portion (approximately 10% to 20%) of the same water is later used to quench the same beans immediately after roasting.

### Example :

Raw green coffee beans are pre-soaked in water for 3 hours at 75° C. 1000 grams of green beans soaked in 2000 mls of water. 1000 mls of pre-soak solution (water used for pre-soaking) was retained after beans are removed from water for roasting. Pre-soaked green beans are roasted in a traditional coffee roaster with temperature starting at 177°C and increasing to 221°C over a period of approximately 15 - 18 minutes.

At the conclusion of the roast, the beans are dropped into a container and immediately quenched with 150 mls of the pre-soak solution. The roasted beans are then ground to a powder and brewed with hot water to produce a coffee beverage.

Chemical analysis showed that the new beverage contains over 20% - 65% of the pre-roasted phenolic acid content, specifically representing chlorogenic acid content at 40% - 150% (depending on degree of roast - bigger increase with darker roast) over that in traditional roasted coffee of a similar roast color;

The powder from the preceding example can be sold as coffee powder for brewing or can be brewed and sold as a ready-to-drink coffee beverage. The resulting product can be taken as a food or functional food by a human or other mammal, orally.

### Conclusions:

The preceding example illustrates that a more healthful polyphenol coffee beverage product can be produced by a very simple variation of conventional coffee roasting methods. In addition, an end product which is healthier and not much more costly than existing coffee powders can be produced, and thereby provide a market and economic benefit to vendors. The present method yields a product which is in no way undesirable from an aesthetic standpoint. Thus, there is no reason not to, and every reason to, adopt the present coffee roasting processing methods for the well being of consumers.

The processes of the present invention represent significant departures from conventional production of roasted coffee products, where green beans are simply roasted and may or may not be quenched with water, whereas the end product of the present invention achieves a chemical profile of increased amounts of phenolic acids and other beneficial compounds which is different from existing roasted coffee brews. This new process yields more active, more bioavailable, and larger quantities of phenolic compounds in end beverage products than can be realized following conventional coffee bean processing methods.

## Claims

1. A method for enhancing polyphenolic acid content in post-processing coffee beans comprising the steps of:
immersing a measure of raw green coffee beans in a pre-soak liquid containing water to extract polyphenolic acids into the re-soak liquid; and treating roasted coffee beans with the pre-soak liquid
**characterised by**: immersing raw green coffee beans in water at 75°C for three hours; removing said coffee beans from said water and roasting said coffee beans; and quenching said coffee beans immediately after said roasting with a portion of said water from which the coffee beans have been removed, thereby enhancing the polyphenolic acid content of said roasted coffee beans over the polyphenolic acid content in traditional roasted coffee beans.

2. The method of claim 1 therein said portion of pre-soak liquid comprises approximately 10% to 20% of such liquid.

## Patentansprüche

1. Verfahren zum Erhöhen des Polyphenolsäuregehalts in Kaffeebohnen nach der Verarbeitung, umfassend die Schritte:
Eintauchen einer Maßeinheit von rohen grünen Kaffeebohnen in eine Wasser enthaltende Extraktionsflüssigkeit, um Polyphenolsäuren in die Extraktionsflüssigkeit zu extrahieren; und
Behandeln gerösteter Kaffeebohnen mit der Extraktionsflüssigkeit;
**gekennzeichnet durch**
Eintauchen roher grüner Kaffeebohnen in Wasser bei 75°C für drei Stunden;
Entfernen jener Kaffeebohnen aus jenem Wasser und Rösten jener Kaffeebohnen; und
Abschrecken jener Kaffeebohnen unmittelbar nach dem Rösten mit einem Teil jenes Wassers, aus dem die Kaffeebohnen entfernt worden sind, um **dadurch** den Polyphenolsäuregehalt der gerösteten Kaffeebohnen über den Polyphenolsäuregehalt in herkömmlich gerösteten Kaffeebohnen anzuheben.

2. Verfahren nach Anspruch 1, bei dem der Teil der Extraktionsflüssigkeit etwa 10% bis 20% jener Flüssigkeit umfasst.

## Revendications

1. Procédé d'augmentation de la teneur en acides polyphénoliques dans le post-traitement de grains de café, comprenant les étapes :
- d'immersion d'une mesure de grains de café verts bruts dans un liquide de prétrempage contenant de l'eau pour extraire des acides polyphénoliques dans le liquide de prétrempage ; et
- de traitement des grains de café torréfiés par le liquide de prétrempage,
**caractérisé par** :
- l' immersion de grains de café verts bruts dans de l'eau à 75°C pendant trois heures ;
- le retrait desdits grains de café de ladite eau et la torréfaction desdits grains de café ; et
- le refroidissement rapide desdits grains de café immédiatement après ladite torréfaction par une partie de ladite eau à partir de laquelle les grains de café ont été retirés, permettant ainsi d'augmenter la teneur en acides polyphénoliques desdits grains de café torréfiés par rapport à la teneur en acides polyphénoliques dans les grains de café torréfiés traditionnels.

2. Procédé selon la revendication 1, dans lequel ladite partie dudit liquide de prétrempage comprend approximativement 10 % à 20 % d'un tel liquide.
